# EUROPEAN PATENT SPECIFICATION

(11) **EP 1 344 226 B1**
(45) Date of publication and mention of the grant of the patent: **20.09.2006**
(21) Application number: 01271640.3
(22) Date of filing: 19.12.2001
(51) Int. Cl.: G21F 1/00, G21F 3/00

(54) **METHOD TO MAKE RADIOPAQUE A REINFORCING LAYER FOR A MANUFACTURED PRODUCT MADE OF ELASTOMERIC MATERIAL AND MANUFACTURED PRODUCT COMPRISING SAID LAYER**
VERFAHREN ZUM FUNKOPAL WERDEN LASSEN EINER VERSTÄRKUNGSSCHICHT FÜR EIN HERGESTELLTES PRODUKT AUS ELASTOMEREM MATERIAL UND HERGESTELLTES PRODUKT MIT DER SCHICHT
PROCEDE PERMETTANT DE CONFERER UNE RADIO-OPACITE A UNE TOILE DE RENFORT POUR UN PRODUIT MANUFACTURE FABRIQUE A PARTIR D'UN MATERIAU ELASTOMERE, ET PRODUIT MANUFACTURE COMPRENANT UNE TELLE TOILE

(30) Priority: 19.12.2000 IT RM20000678
(43) Date of publication of application: 17.09.2003
(73) Proprietor: Pirelli Tyre S.p.A., 20126 Milano (IT); Trelleborg Wheel Systems S.P.A., 00010 Tivoli (IT)
(72) Inventor: CATALDO, Franco, I-00100 Roma (IT); MEDAGLIA, Gabriele, I-20091 Bresso (IT)
(74) Representative: Bottero, Carlo
(86) International application number: PCT/IB2001/002594
(87) International publication number: WO 2002/050846

(56) References cited:
- EP-A- 0 050 457
- EP-A- 0 928 702
- GB-A- 2 098 073
- US-A- 4 283 447
- US-A- 4 756 925
- US-A- 4 813 062
- US-A- 4 821 511
- US-A- 4 882 392
- US-A- 5 024 232
- US-A- 5 148 456

## Description

The present invention relates to a method to make radiopaque a reinforcing fabric for a manufactured product made of elastomeric material.

More particularly, the present invention relates to a method to make radiopaque a reinforcing fabric used in the industry of tyres for vehicle wheels, said method comprising the use of a radiopaque compound.

The present invention also relates to a manufactured product made of elastomeric material comprising said fabric.

In the rubber industry, in particular in the industry of tyres for vehicle wheels, it is known practice to use reinforcing fabrics comprising a plurality of textile reinforcing elements (for example cords made of rayon, nylon or polyethylene terephthalate), or metal reinforcing elements (for example individual or stranded together steel wires, coated with a metal alloy, for example copper/zinc, zinc/molybdenum/cobalt, zinc/manganese or zinc/cobalt alloys), or reinforcing elements made of fibre (for example glass fibre, carbon fibre, and the like). In particular, said cords are arranged parallel to each other and in a co-planar manner in the fabric, and are enclosed in an elastomeric material whose thickness is suited to the use of the fabric. Said reinforcing cords, thus arranged, form something analogous to a warp of a fabric, while the presence of the weft is generally avoided since the elastomeric material which coats them and welds them together also has the function of maintaining their arrangement.

A tyre generally comprises a carcass structure provided with at least one carcass ply containing reinforcing cords that are substantially oriented in radial planes containing the rotation axis of the tyre, a tread band extending circumferentially around said carcass structure, a belt structure circumferentially interposed between the carcass structure and the tread band. The belt structure, in turn, comprises at least one pair of radially superposed belt strips and a reinfoorcing layer radially external to said pair of strips. Said at least one pair of strips is axially extended substantially as said tread band, and each strip has a plurality of cords that are obliquely oriented relative to the equatorial plane of the tyre. The reinforcing cords of one strip are arranged in the opposite direction relative to the cords of the strip that is radially adjacent thereto. Said reinforcing layer, also known as a 0° layer, contains reinforcing cords that are substantially parallel to each other and parallel to the equatorial plane of the tyre.

It should be pointed out that for the purposes of the present description and the subsequent claims the term "cords" means both monofilaments and bundles of monofilaments not twisted together.

In order to control the quality of the finished tyres, it is common practice to control by X-ray analysis the correct arrangement, in particular the uniformity of density, of the reinforcing cords, thereby achieving a total control rather than merely a random control on said tyres. However, the use of X-rays is limited to controlling metal reinforcing cords: the reason for this is that the metals present in said cords are sufficiently X-ray-opaque and are capable of absorbing the rays to a far greater extent than the elastomeric material that surrounds them. On the other hand, in the current state, it is not possible to check the correct arrangement of non-metallic reinforcing cords. Said problem is particularly experienced in the case of tyres in which the reinforcing cords are typically made of textile, such as, for example, agricultural tyres and, in particular, high-performance car tyres and motorcycle tyres. In this case, the only possibility for checking the correct arrangement of said reinforcing cords is that of sectioning the tyre and then performing a destructive and expensive operation. In addition, it is clear that it is not possible to perform a total control on the finished tyres, as in the case of metal reinforcing cords, but rather it must be limited to only a random control.

Methods to make polymer materials radiopaque have been suggested in the prior art.

For example, patent US 4 882 392 describes a radiopaque polymer derived from the reaction between a heavy metal salt of a Lewis acid and at least one Lewis monomer selected from alkyl and vinyl alkyl ketones, aryl and alkyl esters of unsaturated carboxylic acids, vinyl esters of carboxylic acids, cellulose esters, linear or crosslinked polyesters.

Patent US 4 283 447 describes a radiopaque composition comprising (a) a polyurethane resin, as such or blended with a vinyl resin, and (b) an alkyl or alkoxyalkyl derivative of 2,5-diiodobenzoate or of 2,3,4,6-tetraiodobenzoate, as such or mixed together.

Patent application WO 00/34957 describes a fabric for personal protection devices, for example surgical masks, which has been made radiopaque by impregnation with a radiopaque compound such as, for example, barium sulphate. Besides barium sulphate, other radiopaque compounds that may be used are selected, for example, from: iopamidol, iopanoic acid, iopentol, iocetamic acid, sodium acetrizoate, metrizamide, etc. Said impregnation may be carried out, for example, by immersing the fabric in a solution containing said radiopaque compound.

No reference has been made in the prior art to the possibility of using said radiopaque compounds in the case of rubberized fabrics for reinforcing manufactured products made of elastomeric material.

It is thought that the use of radiopaque compounds in reinforcing fabrics for manufactured products made of elastomeric material can create problems in the finished elastomeric manufactured product, in particular problems of poor adhesion between the elastomeric material and the non-metallic reinforcing cords. In the case where said reinforcing fabric is used in tyres for vehicle wheels, poor adhesion between the reinforcing cords and the elastomeric material can cause serious phenomena of detachment and, consequently, can have a negative impact both on the performance qualities and on the lifetime of the tyre.

It is known that in the case of manufactured products made of elastomeric material, in particular in the case of tyres for vehicle wheels, the non-metallic reinforcing cords are generally treated with particular adhesive baths for the purpose of enabling their adhesion to said elastomeric material.

It is thought that the use of said radiopaque compounds, in particular those consisting of salts of generally divalent or trivalent heavy metals, in said baths can create stability problems of the same. As a matter of fact, physicochemical incompatibility between the radiopaque compound used and the adhesive bath may be found, in particular during the stage of preparing said adhesive bath. For example, in the case of using adhesive baths comprising a polymer latex in which are dissolved other compounds of the type such as those described, for example, in patent US 4 756 925, the stability of said baths, as stated above, may be compromised by the presence of metal cations, in particular divalent and trivalent metal cations, and may thus create adhesion problems between the non-metallic reinforcing cords treated with the radiopaque compound and the elastomeric material.

The Applicant has now found that it is possible to make radiopaque a reinforcing fabric for elastomeric manufactured products by using a radiopaque compound of the type such as those described above; in this way, it then becomes possible to control, by X-ray radiography, the correct arrangement of said reinforcing cords. In particular, in the case of tyres for vehicle wheels, it is possible to achieve a total production control, that is to say a total control on all the finished tyres, before marketing these tyres, thus avoiding the use of destructive and more expensive techniques which, clearly, are limited to a random control. In addition, it has been found that said radiopaque compound causes no problems of adhesion between the reinforcing cords and the elastomeric material and, in the case of addition to an adhesive bath, does not cause any problems of instability of the same.

According to a first aspect, the present invention thus relates to a method to make radiopaque a reinforcing fabric made of elastomeric material comprising non-metallic reinforcing cords, said method comprising the following stages:
(a) rendering said cords radiopaque by means of at least one radiopaque compound;
(b) enclosing said cords in said elastomeric material.

In a second aspect thereof, the present invention relates to a reinforcing fabric made of elastomeric material comprising a plurality of non-metallic reinforcing cords, at least partially enclosed in an elastomeric material, characterized in that said cords are radiopaque.

In a third aspect thereof, the present invention relates to an elastomeric manufactured product which includes a reinforcing fabric comprising radiopaque non-metallic reinforcing cords.

According to a further aspect thereof, the present invention relates to a tyre for vehicle wheels including at least one rubberized reinforcing fabric made of elastomeric material comprising a plurality of non-metallic reinforcing cords, characterized in that said cords are radiopaque.

In accordance with this aspect, the present invention relates to a tyre for vehicle wheels, comprising:
- a carcass structure having at least one carcass ply comprising reinforcing cords that are substantially oriented in radial planes containing the rotation axis of the tyre;
- a tread band extending circumferentially around said carcass structure;
- a belt structure circumferentially interposed between the carcass structure and the tread band, comprising at least one pair of radially superposed belt strips, each strip having a plurality of reinforcing cords that are obliquely oriented relative to the equatorial plane of the tyre, parallel to each other in each strip and cross over those of the adjacent strip;
characterized in that it comprises radiopaque non-metallic reinforcing cords.

According to a further preferred embodiment, the reinforcing cords of said carcass ply are radiopaque non-metallic cords.

According to a further preferred embodiment, said belt structure comprises a reinforcing layer radially external to said pair of strips, which is provided with non-metallic reinforcing cords that are substantially parallel to each other and to the abovementioned equatorial plane, said non-metallic reinforcing cords of said radially external layer being radiopaque.
According to one preferred embodiment of the invention, the abovementioned radiopaque non-metallic cords consist of organic or inorganic fibres.

Organic fibres that may be used according to the present invention can be selected from polymer fibres of natural or synthetic origin such as, for example: cellulose; rayon; polypropylene; polyesters, and among these, in particular, polybutylene terephthalate, polyethylene terephthalate, polyethylene naphthalate; polyamides, in particular nylon-6 or nylon-66, or aromatic polyamides such as, for example, long fibres of poly(para-phenyleneterephthalamide) or short fibrillated fibres of poly(para-phenyleneterephthalamide) (also known as aramid pulp), of the type known commercially as Kevlar® pulp from Du Pont or Twaron® pulp from Akzo; polyketones; poly-p-benzamide; poly(vinyl alcohols); polyetheramides; or mixtures thereof.

Inorganic fibres that may be used according to the present invention can be selected, for example, from: glass fibres, carbon fibres, or mixtures thereof.

According to one preferred embodiment, the radiopaque compound may be selected from organic or inorganic salts of heavy metals.

Examples of heavy metals that may be used according to the present invention are: chromium, manganese, iron, cobalt, nickel, copper, zinc, palladium, silver, cadmium, tin, platinum, gold, mercury, lead, barium, radium, thorium, uranium, or mixtures thereof. Barium, lead are preferred.

Organic salts of heavy metals that may be used according to the present invention can be selected from the salts of saturated or unsaturated, aliphatic, alicyclic or aromatic carboxylic acids, sulphonic acids, phosphonic acids, boric acids, or mixtures thereof, said acids optionally being substituted with, for example, alkyl groups. Heavy metal salts of saturated or unsaturated aliphatic or aromatic carboxylic acids are preferred.

Specific examples of aliphatic carboxylic acids that may be used according to the present invention are: formic acid, acetic acid, propionic acid, butyric acid, heptanoic acid, ethylhexanoic acid, octanoic acid, neodecanoic acid, dodecanoic acid, or mixtures thereof; or fatty acids such as, for example, stearic acid, oleic acid, linoleic acid, palmitic acid, or mixtures thereof.

Specific examples of aromatic carboxylic acids that may be used according to the present invention are: benzoic acid, naphthoic acid, phthalic acid, p-phenylenediacetic acid, or mixtures thereof.

Organic salts of heavy metals that are preferred according to the present invention are: propionates, hexanoates, dodecanoates, stearates, naphthenates, alkylsulphonates, or mixtures thereof. Lead naphthenate, barium dodecanoate, barium stearate, lead salts of 2-ethylhexanoic acid, or mixtures thereof, are preferred.

Inorganic salts of heavy metals that may be used according to the present invention are halides, sulphates, carbonates, phosphates, tungstates, or mixtures thereof. Barium sulphate, barium tungstate are preferred.

According to one preferred embodiment, the organic or inorganic salt of a heavy metal is present in an amount of not less than 0.1 mmol of metal/g of fibre, preferably between 0.5 mmol and 2 mmol of metal/g of fibre.

It should be pointed out that, for the purposes of the present description and the subsequent claims, the expression "mmol of metal" is intended to indicate the amount of metal ions present in the composition.

According to a further preferred embodiment, the radiopaque compound may be selected from water-soluble nonionic organic compounds containing at least one iodine atom, preferably at least three iodine atoms, that are stable at temperatures above 90°C. Examples of said compounds that may be used according to the present invention are: iopamidol, ioglycamic acid, iopanoic acid, metrizamide, iohexol, propyliodone. Iopamidol is preferred.

According to a further preferred embodiment, the radiopaque compound may be selected from the salts (ionic organic compounds) of the organic compounds mentioned above. Examples of said salts are: sodium iopodate, sodium diatrizoate, erythrosin B, sodium iodophthalein, or mixtures thereof. Sodium iopodate is preferred.

Other nonionic organic compounds containing at least one iodine atom or salts of said compounds that may be used according to the present invention are described, for example, in the abovementioned patent application WO 00/34957. In this case, it is necessary, however, to assess the effective industrial usefulness of these compounds.

According to one preferred embodiment, the nonionic organic compound or the salt of said organic compound is present in an amount of not less than 0.1 mmol of iodine/g of fibre, preferably between 0.5 mmol and 2 mmol of iodine/g of fibre.

It should be pointed out that, for the purposes of the present description and the claims, the expression "mmol of iodine" is intended to indicate the amount of iodine ions present in the composition.

The elastomeric material that is preferred for rubberizing the radiopaque cords according to the present invention may be selected from the elastomeric polymers usually used in the tyre industry. Examples of elastomeric polymers that may be advantageously used are: natural rubber (NR), epoxidized natural rubber (ENR); homopolymers and copolymers of butadiene, of isoprene or of 2-chlorobutadiene, such as, for example, polybutadiene (BR), polyisoprene (IR), styrene-butadiene (SBR), nitrile-butadiene (NBR), polychloroprene (CR); butyl rubbers (IIR), halogenated butyl rubbers (XIIR); ethylene/propylene copolymers (EPM); ethylene/propylene/non-conjugated diene (such as, for example, norbornene, cyclooctadiene or dicyclopentadiene) terpolymers (EPDM); or blends thereof. A person skilled in the art will be capable of determining which elastomeric polymers to use depending on the type of final manufactured product that it is desired to obtain.

Stage (a) of the method according to the present invention may be carried out according to various processes.

A first process comprises the stage of adding at least one radiopaque compound, as such (in bulk) or dissolved in water or in a suitable solvent (depending on the type of polymerization and of the medium in which it is carried out), during the polymer polymerization stage.

A second process comprises the stage of adding at least one radiopaque compound as such to the bulk of the polymer melt, or to the polymer solution, in the stage immediately preceding the spinning of the polymer. Said second process is particularly preferred in the case where the radiopaque compound is selected from the organic or inorganic salts of heavy metals described above.

The abovementioned processes thus make it possible to obtain, at the end of the polymerization and of the subsequent spinning, a floss comprising the radiopaque compound which will subsequently be used to produce the reinforcing cords.

The polymerization and the subsequent spinning are carried out according to techniques known in the art as described, for example, by H. F. Mark, S. M. Atlas, E. Cernia in "Man-Made Fibers - Science and Technology" (1968), published by Interscience Publishers (John Wiley & Sons).

A third process comprises the stage of adding at least one radiopaque compound as such to a finishing agent with which the polymer floss are treated after the spinning operation, before being wound on reels. Various types of finishing agents are known, as described, for example, in patent application EP 1 052 325, or in patents US 4 725 635 and US 4 880 906. The treatment with the finishing agent improves the processibility of the spun product in the subsequent stages of winding on reels, twisting, thermofastening, and also gives the finished manufactured product better fatigue properties.

A fourth process comprises the stage of adding at least one radiopaque compound to an adhesive composition with which the non-metallic reinforcing cords will subsequently be treated so as to obtain good adhesion between said cords and the elastomeric material. As a matter of fact, as stated above, the non-metallic reinforcing cords are usually treated with an adhesive composition comprising a rubber latex and a precondensed resorcinol-formaldehyde resin. Said adhesive composition is commonly known as "RFL". In said composition, the resorcinol/formaldehyde molar ratio is generally between 1:0.1 and 1:8, preferably between 1:0.5 and 1:5, even more preferably between 1:1 and 1:4.

Examples of rubber latices that may be used for this purpose are: natural rubber latex, styrene-butadiene copolymer latex, vinylpyridine-styrene-butadiene terpolymer latex, nitrile rubber latex, chloroprene rubber latex, or mixtures thereof. A latex comprising from 50% to 100% of a vinylpyridine-styrene-butadiene terpolymer is preferably used.

In the abovementioned adhesive composition, the precondensed resorcinol-formaldehyde resin and the rubber latex are present in a ratio of between 1:1 and 1:1.5, preferably between 1:3 and 1:12, said ratio being expressed as an amount in dry weight of the two components.

In the case where the rubber latex content of the adhesive composition is excessively low, the cords thus treated are liable to show excessive rigidity and reduced fatigue resistance. However, in the opposite case, said cords are liable to show poor adhesion properties and, consequently, insufficient adhesion to the elastomeric material.

The non-metallic reinforcing cords may be impregnated with the abovementioned adhesive composition by working according to methods known in the art such as, for example, roller coating, spray coating, dipping.

Preferably, the non-metallic reinforcing cords are impregnated with an amount of adhesive composition of between 0.1% and 10%, more preferably between 0.5% and 7%, said amount being expressed as a percentage in dry weight relative to the total weight of the adhesive composition plus the cord. The amount of adhesive composition that needs to be impregnated onto said cords may be controlled according to known techniques such as, for example, compressing said cords immersed in the adhesive composition by using two nip rollers, or removing the excess composition with a scraper, with a flow of air, by suction ("deweber").

Once the non-metallic cords have been impregnated, the adhesive composition is dried and crosslinked at 120°C or at higher temperatures, preferably at 180°C, care being taken, however, not to exceed the melting point of the polymer material of which the cords are made.

Generally, said adhesive compositions are water-based compositions. However, solvent-based adhesive compositions may be used. Solvents that are useful for this purpose may be selected from organic solvents such as, for example, toluene, dimethylformamide, methyl ethyl ketone, dichlorobenzene, dimethyl sulphoxide, or mixtures thereof. Even though, on account of the toxicity and the increased costs of said solvents, said solvent-based adhesive compositions are generally rarely used, the case in which the radiopaque compound is added to a solvent-based adhesive bath should nevertheless be considered as forming part of the present invention.

Said fourth process is particularly preferred in the case where the radiopaque compound is selected from water-soluble nonionic organic compounds containing at least one iodine atom, or from salts of said compounds.

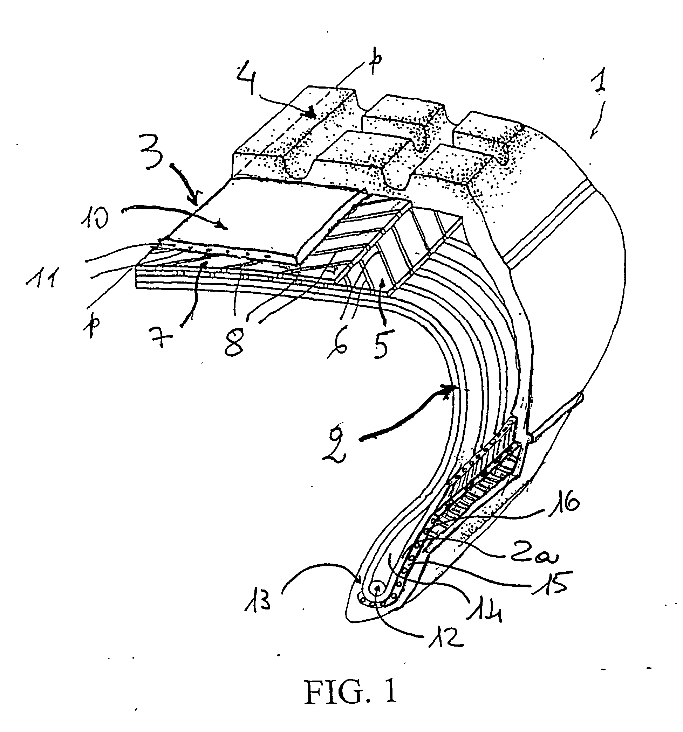

After adding the radiopaque compound in stage (a), stage (b) of the method according to the present invention is performed, in which the non-metallic reinforcing cords need to be enclosed in the elastomeric material so as to obtain the reinforcing fabric. The techniques used and the operating conditions under which said stage (b) is performed depend on the particular reinforcing fabric that it is desired to obtain and are known to those skilled in the art.
The present invention will now be further illustrated by means of an implementation example, with reference to the attached Figure 1, which shows a view in cross section of a portion of a tyre produced according to the invention.

The tyre 1 comprises, in a manner that is known per se, a carcass structure 2 containing one or more carcass plies each comprising reinforcing cords (represented diagrammatically) consecutively placed side by side and arranged in substantially radial planes containing the rotation axis of the tyre. In accordance with one preferred embodiment of the present invention, said reinforcing cords are radiopaque non-metallic cords, for example rayon cords.

Around the carcass structure 2 is circumferentially applied, in a centred position relative to the equatorial plane p-p of the tyre, a belt structure indicated overall by 3, in a position radially external to which is placed a tread band 4.

In Figure 1, the tread band 4 of the tyre 1 has, on its outer rolling surface, a tread pattern in relief comprising, in a known manner, a plurality of circumferential and transverse notches and grooves.

The belt structure 3 comprises at least a first belt strip 5 in a position radially external to the carcass 2, a second belt strip 7 placed in a position radially external to said first strip 5, and a reinforcing layer 10, in a position radially external to said second strip 7. For greater clarity of illustration, the strips 5, 7 and the reinforcing layer 10 are shown with gradually decreasing widths, although this should not be interpreted in a limiting sense.

The first belt strip 5 and the second belt strip 7 comprise metal cords, laid side by side and oriented obliquely relative to the equatorial plane p-p of the tyre, preferably at an angle of between 10° and 30°. In addition, the cords of the second belt strip 7 are inclined in the opposite direction relative to the cords of the first belt strip 5. The non-metallic reinforcing cords 11 of the reinforcing layer 10 are substantially parallel to each other and oriented in a direction substantially parallel to the equatorial plane p-p of the tyre. Preferably, said non-metallic reinforcing cords 11 are axially equidistant from each other within the same layer 10. In accordance with one preferred embodiment of the present invention, said reinforcing cords 11 are radiopaque non-metallic cords, for example nylon cords.

The abovementioned carcass structure 2 has two axially opposite side walls, extending radially between one end of the tread band and an inner circumferential edge of the tyre 1, via which the tyre engages on a rim (not shown in Figure 1) forming part of a vehicle wheel.

Each edge, usually defined as the bead 13, encloses a bead wire 12 around which is bound, for example axially back-folded from the inside outwards, the end of the carcass ply 2a; in a position radially external to the bead wire 12 is placed a bead filling 14 which occupies the space defined by each back-fold of the carcass ply.

Alternatively, the conventional bead wires 12 may be replaced with a pair of circumferentially unstretchable annular inserts formed from elongate components arranged in concentric spirals (not shown in Figure 1) (see, for example, European patent applications EP 928 680 and EP 928 702). In this case, the carcass ply 2a is not back-folded around said annular inserts, the coupling being provided by a second carcass ply (not shown in Figure 1) applied externally onto the first.

A reinforcing edge 15, formed from a strip of elastomeric material comprising reinforcing cords 16, generally inclined relative to the radial direction at an angle preferably of between 15° and 45°, may be placed around the bead wire 12 and the bead filling 14 to protect the tyre bead from friction against the mounting rim. In accordance with one preferred embodiment of the present invention, said reinforcing cords 16 are radiopaque non-metallic cords, for example polyethylene terephthalate cords.

The process for producing the tyre according to the present invention may be performed according to techniques and using apparatus that are known in the art, as described, for example, in patents EP 199 064, US 4 872 822 and US 4 768 937, said process including at least one stage of assembling the raw tyre and at least one stage of vulcanizing the tyre.

Alternative processes for producing a tyre or parts thereof without the use of semi-finished products are described, for example, in patent applications EP 928 680 and EP 928 702 mentioned above.

At the end of the vulcanization, as stated above, it is important to be able to check, by means of nondestructive analyses performed on all the tyres produced, the correct arrangement of the non-metallic cords of the various reinforcing elements embedded in the structure of the tyre, for example in the carcass plies, in the 0° belt layer, or in the reinforcing loops, edges and strips. In particular, it is important to check the uniformity of density of said cords since any inhomogeneities, that is to say localized densifications and rarefactions, constitute points of weakness in the structure that may lead to reduced performance qualities and safety risks in the tyre during use.

Although the present invention has been specifically illustrated in relation to a tyre, it similarly finds use advantageously in the production of other elastomeric manufactured products that may be produced according to the invention, such as, for example, conveyor belts, transmission belts and flexible tubes.

The present invention will be further illustrated hereinbelow by the description of a method to make said non-metallic cords radiopaque, which is given purely as a non-limiting guide.

### EXAMPLE

155 g of iopamidol and 200 ml of demineralized water were placed in a 500 ml glass flask. The mixture was stirred until the iopamidol was completely dissolved. The solution thus prepared, containing 370 mg/ml of iodine, was used to treat 1840*2 d/Tex rayon cords ("dTex" means the weight in grams corresponding to 10 000 m of floss - "*2" means that the cord under consideration was two-strands - "strands" means a bundle of flosses or of monofilaments twisted together). The ply obtained from the flosses was subjected to 480 twists per metre.

Three samples of the abovementioned cords 5 cm in length were impregnated by immersion in the iopamidol solution prepared as described above, and were then placed in a ventilated oven at 107°C for the time required to remove all the moisture, so as to achieve a constant sample weight.

The samples thus prepared were placed between two sheets of compound, the composition of which is given in Table 1, so as to obtain specimens with a total thickness of 20 mm; the cords were placed 15 mm away from one of the two surfaces of the specimen, which corresponds substantially to the maximum depth at which the cords may be found in the tyre structure.

As a reference, a reinforcing element consisting of a steel monofilament having a diameter equal to 0.175 mm was placed in this specimen.
In addition, as a further reference, a rayon cord having the properties given above (1840*2 dTex) not treated with the iopamidol solution was placed between two sheets of the same compound given in Table 1 to produce a specimen having the properties given above.

The specimens thus obtained were examined by X-ray, working according to known techniques as described, for example, in patent US 5 148 456. The radiographs showed a clear radiopacity of the rayon cords treated with the iopamidol solution.

As expected, the steel monofilament was detected by the radiograph, whereas the untreated rayon cord was invisible to the radiographic examination carried out on both surfaces of the specimen.

The amount of iodine deposited on the rayon cords was calculated (and was found to be equal to 1.6 mmol of iodine/g of fibre) by weighing the fibres before and after treatment.

**TABLE 1**

| INGREDIENTS | phr(*) |
|---|---|
| (NR) | 100.00 |
| (N326) | 54.00 |
| Stearic acid | 1.50 |
| Rhenogran resorcinol® 80 | 1.58 |
| 6-PPD | 1.00 |
| Zinc oxide | 5.00 |
| 33% insoluble sulphur | 4.05 |
| HMMM | 2.92 |
| TBBS | 1.00 |

| | |
|---|---|
| (*): for the purposes of the present description and the claims, the term "phr" means the parts by weight of a given component of the compound per 100 parts by weight of rubber. NR: natural rubber; N326: carbon black; Rhenogran resorcinol® 80: 80% resorcinol supported on a polymer excipient, from Rhein-Chemie (adhesion promoting agent); 6-PPD: para-phenylenediamine, Santoflex® 13 from Monsanto (protective agent); 33% insoluble sulphur: Crystex® OT33 from Flexsys; HMMM: hexamethoxymethylenemelamine, Cyrez® 963 from Cytec (methylene donor); TBBS: N-t-butyl-2-benzothiazylsulphenamide, Vulkacit® NZ from Bayer (accelerator). | |

## Claims

1. Method to make radiopaque a reinforcing fabric made of elastomeric material comprising non-metallic reinforcing cords, said method comprising the following stages:
(a) rendering said cords radiopaque by means of at least one radiopaque compound;
(b) enclosing said cords in said elastomeric material.

2. Method according to Claim 1, in which the non-metallic cords are selected from the group comprising organic and inorganic fibres.

3. Method according to Claim 2, in which the organic fibres are selected from polymer fibres of natural or synthetic origin.

4. Method according to Claim 3, in which the organic fibres are selected from the group comprising: cellulose; rayon; polypropylene; polyesters; polyamides, aromatic polyamides; polyketones; poly-p-benzamide; poly(vinyl alcohols); polyetheramides; mixtures thereof.

5. Method according to Claim 2, in which the inorganic fibres are selected from the group comprising: glass fibers, carbon fibres, mixtures thereof.

6. Method according to Claim 1, in which the radiopaque compound is selected from organic or inorganic salts of heavy metals.

7. Method according to Claim 6, in which the heavy metals are selected from the group comprising: chromium, manganese, iron, cobalt, nickel, copper, zinc, palladium, silver, cadmium, tin, platinum, gold, mercury, lead, barium, radium, thorium, uranium.

8. Method according to Claim 7, in which the heavy metals are selected from barium, lead.

9. Method according to Claim 6, in which the organic salts of heavy metals are selected from the group comprising the salts of saturated or unsaturated, aliphatic, alicyclic or aromatic carboxylic acids, sulphonic acids, phosphonic acids, boric acids, or mixtures thereof.

10. Method according to Claim 9, in which the organic salts of heavy metals are selected from saturated or unsaturated aliphatic or aromatic carboxylic acid salts.

11. Method according to Claim 10, in which the aliphatic carboxylic acids are selected from the group comprising: formic acid, acetic acid, propionic acid, butyric acid, heptanoic acid, hexanoic acid, ethylhexanoic acid, octanoic acid, neodecanoic acid, dodecanoic acid, mixtures thereof; or fatty acids such as stearic acid, oleic acid, linoleic acid, palmitic acid, or mixtures thereof.

12. Method according to Claim 9, in which the aromatic carboxylic acids are selected from the group comprising: benzoic acid, naphthoic acid, phthalic acid, p-phenylenediacetic acid, mixtures thereof.

13. Method according to Claim 9, in which the organic salts of heavy metals are selected from the group comprising: propionates, hexanoates, dodecanoates, stearates, naphthenates, alkylsulphonates, mixtures thereof.

14. Method according to Claim 13, in which the organic salts of heavy metals are selected from the group comprising lead naphthenate, barium dodecanoate, barium stearate, lead salts of 2-ethylhexanoic acid, mixtures thereof.

15. Method according to Claim 6, in which the inorganic salts of heavy metals are selected from the group comprising halides, sulphates, carbonates, phosphates, tungstates, mixtures thereof.

16. Method according to Claim 15, in which the inorganic salts of heavy metals are selected from barium sulphate, barium tungstate.

17. Method according to Claim 6, in which the organic or inorganic salt of a heavy metal is present in an amount of not less than 0.1 mmol of metal/g of fibre.

18. Method according to Claim 17, in which the organic or inorganic salt of a heavy metal is present in an amount of between 0.5 mmol and 2 mmol of metal/g of fibre.

19. Method according to Claim 1, in which the radiopaque compound is selected from the group comprising water-soluble nonionic organic compounds containing at least one iodine atom, that are stable at temperatures above 90°C.

20. Method according to Claim 19, in which the radiopaque compound is selected from the group comprising water-soluble nonionic organic compounds containing at least three iodine atoms, that are stable at temperatures above 90°C.

21. Method according to Claim 19, in which the organic compounds are selected from the group comprising: iopamidol, ioglycamic acid, iopanoic acid, metrizamide, iohexol, propyliodone.

22. Method according to Claim 21, in which the organic compound is iopamidol.

23. Method according to Claim 1, in which the radiopaque compound is selected from the group comprising the salts (ionic organic compounds) of the organic compounds mentioned in Claims 19 to 22.

24. Method according to Claim 23, in which the radiopaque compound is selected from sodium iopodate, sodium diatrizoate, erythrosin B, sodium iodophthalein, and mixtures thereof.

25. Method according to Claim 24, in which the radiopaque compound is sodium iopodate.

26. Method according to Claim 19, in which the nonionic organic compound is present in an amount of not less than 0.1 mmol of iodine/g of fibre.

27. Method according to Claim 26, in which the nonionic organic compound is present in an amount of between 0.5 mmol and 2 mmol of iodine/g of fibre.

28. Method according to Claim 23, in which the ionic organic compound is present in an amount of not less than 0.1 mmol of iodine/g of fibre.

29. Method according to Claim 28, in which the ionic organic compound is present in an amount of between 0.5 mmol and 2 mmol of iodine/g of fibre.

30. Method according to Claim 1, in which stage (a) comprises adding at least one radiopaque compound, dissolved in water, during the polymer polymerization stage.

31. Method according to Claim 1, in which stage (a) comprises adding at least one radiopaque compound in unmodified form to the bulk of the polymer melt, in the stage immediately preceding the spinning of the polymer.

32. Method according to Claim 31, in which the radiopaque compound is selected from the organic or inorganic salts of heavy metals mentioned in any one of Claims 6 to 18.

33. Method according to Claim 1, in which stage (a) comprises adding at least one radiopaque compound in unmodified form to a finishing agent.

34. Method according to Claim 1, in which stage (a) comprises adding at least one radiopaque compound to an adhesive composition.

35. Method according to Claim 34, in which the radiopaque compound is selected from the nonionic compounds, or the salts of said compounds, mentioned in any one of Claims 19 to 29.

36. Reinforcing fabric made of elastomeric material comprising a plurality of non-metallic reinforcing cords, at least partially enclosed in an elastomeric material, **characterized in that** said cords are radiopaque.

37. Reinforcing fabric according to Claim 36, in which the non-metallic reinforcing cords are defined in any one of Claims 2 to 5.

38. Elastomeric manufactured product which includes a reinforcing fabric comprising radiopaque non-metallic reinforcing cords.

39. Elastomeric manufactured product according to Claim 38, in which the non-metallic reinforcing cords are defined in any one of Claims 2 to 5.

40. Tyre for vehicle wheels including at least one rubberized reinforcing fabric made of elastomeric material comprising a plurality of non-metallic reinforcing cords, **characterized in that** said cords are radiopaque.

41. Tyre for vehicle wheels, comprising:
- a carcass structure having at least one carcass ply comprising reinforcing cords that are substantially oriented in radial planes containing the rotation axis of the tyre;
- a tread band extending circumferentially around said carcass structure;
- a belt structure circumferentially interposed between the carcass structure and the tread band, comprising at least one pair of radially superposed belt strips, each strip having a plurality of reinforcing cords that are obliquely oriented relative to the equatorial plane of the tyre, parallel to each other in each strip and cross over those of the adjacent strip;
**characterized in that** it comprises radiopaque non-metallic reinforcing cords.

42. Tyre for vehicle wheels according to Claim 41, in which the reinforcing cords of said carcass ply are radiopaque non-metallic cords.

43. Tyre for vehicle wheels according to Claim 41, in which said belt structure comprises a reinforcing layer radially external to said pair of strips, which is provided with non-metallic reinforcing cords that are substantially parallel to each other and to the abovementioned equatorial plane, said non-metallic reinforcing cords of said radially external reinforcing layer being radiopaque.

44. Tyre for vehicle wheels according to Claim 41, in which the non-metallic reinforcing cords are defined in any one of Claims 2 to 5.

## Patentansprüche

1. Verfahren zum Radiopakmachen eines Verstärkungstuchs aus elastomerem Material, das nichtmetallische Verstärkungskorde aufweist, wobei das Verfahren die folgenden Schritte aufweist:
(a) Radiopakmachen der Korde mit Hilfe wenigstens einer radiopaken Verbindung und
(b) Einschließen der Korde in das elastomere Material.

2. Verfahren nach Anspruch 1, bei welchem die nichtmetallischen Korde aus der Gruppe ausgewählt werden, die organische und anorganische Fasern aufweist.

3. Verfahren nach Anspruch 2, bei welchem die organischen Fasern aus Polymerfasern natürlichen oder synthetischen Ursprungs ausgewählt werden.

4. Verfahren nach Anspruch 3, bei welchem die organischen Fasern aus der Gruppe ausgewählt werden, die Zellulose, Rayon, Polypropylen, Polyester, Polyamide, aromatische Polyamide, Polyketone, Poly-p-Benzamide, Polyvinylalkohole, Polyetheramide und Mischungen davon aufweist.

5. Verfahren nach Anspruch 2, bei welchem die anorganischen Fasern aus der Gruppe ausgewählt werden, die Glasfasern, Carbonfasern und Mischungen davon aufweist.

6. Verfahren nach Anspruch 1, bei welchem die radiopake Verbindung aus organischen oder anorganischen Salzen von Schwermetallen ausgewählt wird.

7. Verfahren nach Anspruch 6, bei welchem die Schwermetalle aus der Gruppe ausgewählt werden, die Chrom, Mangan, Eisen, Kobalt, Nickel, Kupfer, Zink, Palladium, Silber, Kadmium, Zinn, Platin, Gold, Quecksilber, Blei, Barium, Radium, Thorium und Uran aufweist.

8. Verfahren nach Anspruch 7, bei welchem die Schwermetalle aus Barium und Blei ausgewählt werden.

9. Verfahren nach Anspruch 6, bei welchem die organischen Salze der Schwermetalle aus der Gruppe ausgewählt werden, die Salze von gesättigten oder ungesättigten aliphatischen, alicyclischen oder aromatischen Karbonsäuren, Sulfonsäuren, Phosphonsäuren, Borsäuren oder Mischungen davon aufweist.

10. Verfahren nach Anspruch 9, bei welchem die organischen Salze der Schwermetalle aus gesättigten oder ungesättigten aliphatischen oder aromatischen Karbonsäuresalzen ausgewählt werden.

11. Verfahren nach Anspruch 10, bei welchem die aliphatischen Karbonsäuren aus der Gruppe ausgewählt werden, die Ameisensäure, Essigsäure, Propionsäure, Buttersäure, Heptansäure, Hexansäure, Ethylhexansäure, Octansäure, Neodecansäure, Dodecansäure und Mischungen davon oder Fettsäuren, wie Stearinsäure, Oleinsäure, Linolsäure, Palmitinsäure oder Mischungen davon aufweist.

12. Verfahren nach Anspruch 9, bei welchem die aromatischen Karbonsäuren aus der Gruppe ausgewählt werden, die Benzoesäure, Naphtoesäure, Phthalsäure, p-Phenylendiessigsäure und Mischungen davon aufweist.

13. Verfahren nach Anspruch 9, bei welchem die anorganischen Salze der Schwermetalle aus der Gruppe ausgewählt werden, die Propionate, Hexanoate, Dodecanoate, Stearate, Naphthenate, Alkylsulfonate und Mischungen davon aufweist.

14. Verfahren nach Anspruch 13, bei welchem die organischen Salze der Schwermetalle aus der Gruppe ausgewählt werden, die Bleinaphthenat, Bariumdodecanoat, Bariumstearat, Bleisalze der 2-Ethylhexansäure und Mischungen davon aufweist.

15. Verfahren nach Anspruch 6, bei welchem die anorganischen Salze der Schwermetalle aus der Gruppe ausgewählt werden, die Halogenide, Sulfate, Karbonate, Phosphate, Wolframate und Mischungen davon aufweist.

16. Verfahren nach Anspruch 15, bei welchem die anorganischen Salze der Schwermetalle aus Bariumsulfat und Bariumwolframat ausgewählt werden.

17. Verfahren nach Anspruch 6, bei welchem das organische oder anorganische Salz eines Schwermetalls in einer Menge von nicht weniger als 0,1 mmol Metall/g Faser vorhanden ist.

18. Verfahren nach Anspruch 17, bei welchem das organische oder anorganische Salz eines Schwermetalls in einer Menge zwischen 0,5 mmol Metall/g Faser und 2 mmol Metall/g Faser vorhanden ist.

19. Verfahren nach Anspruch 1, bei welchem die radiopake Verbindung aus der Gruppe ausgewählt wird, die wasserlösliche nichtionische organische Verbindungen aufweist, die wenigstens ein Jodatom enthalten und bei Temperaturen über 90°C stabil sind.

20. Verfahren nach Anspruch 19, bei welchem die radiopake Verbindung aus der Gruppe ausgewählt wird, die wasserlösliche nichtionische organische Verbindungen aufweist, die wenigstens drei Jodatome enthalten und bei Temperaturen über 90°C stabil sind.

21. Verfahren nach Anspruch 19, bei welchem die organischen Verbindungen aus der Gruppe ausgewählt werden, die Iopamidol, Ioglycaminsäure, Iopansäure, Metrizamid, Iohexol und Propyliodon aufweist.

22. Verfahren nach Anspruch 21, bei welchem die organische Verbindung Iopamidol ist.

23. Verfahren nach Anspruch 1, bei welchem die radiopake Verbindung aus der Gruppe ausgewählt wird, die Salze (ionische organische Verbindungen) der organischen Verbindungen der Ansprüche 19 bis 22 aufweist.

24. Verfahren nach Anspruch 23, bei welchem die radiopake Verbindung aus Natriumiopodat, Natriumdiatrizoat, Erythrosin B, Natriumiodophthalein und Mischungen davon ausgewählt wird.

25. Verfahren nach Anspruch 24, bei welchem die radiopake Verbindung Natriumiopodat ist.

26. Verfahren nach Anspruch 19, bei welchem die nichtionische organische Verbindung in einer Menge von nicht weniger als 0,1 mmol Jod/g Faser vorhanden ist.

27. Verfahren nach Anspruch 26, bei welchem die nichtionische organische Verbindung in einer Menge zwischen 0,5 mmol Jod/g Faser und 2 mmol Jod/g Faser vorhanden ist.

28. Verfahren nach Anspruch 23, bei welchem die ionische organische Verbindung in einer Menge von nicht weniger als 0,1 mmol Jod/g Faser vorhanden ist.

29. Verfahren nach Anspruch 28, bei welchem die ionische organische Verbindung in einer Menge von zwischen 0,5 mmol Jod/g Faser und 2 mmol Jod/g Faser vorhanden ist.

30. Verfahren nach Anspruch 1, bei welchem der Schritt (a) das Zugeben von wenigstens einer in Wasser aufgelösten radiopaken Verbindung während des Polymerpolymerisationsstadiums aufweist.

31. Verfahren nach Anspruch 1, bei welchem der Schritt einer radiopaken Verbindung in nicht modifizierter Form zu der Masse der Polymerschmelze in dem Stadium aufweist, das dem Spinnen des Polymers unmittelbar vorhergeht.

32. Verfahren nach Anspruch 31, bei welchem die radiopake Verbindung aus den organischen oder anorganischen Salzen von Schwermetallen ausgewählt wird, wie sie in einem der Ansprüche 6 bis 18 angegeben sind.

33. Verfahren nach Anspruch 1, bei welchem der Schritt (a) das Hinzufügen von wenigstens einer radiopaken Verbindung in nicht modifizierter Form zu einem Appreturmittel aufweist.

34. Verfahren nach Anspruch 1, bei welchem der Schritt (a) das Zugeben von wenigstens einer radiopaken Verbindung zu einer Klebstoffmischung aufweist.

35. Verfahren nach Anspruch 34, bei welchem die radiopake Verbindung aus den nichtionischen Verbindungen oder den Salzen dieser Verbindungen ausgewählt wird, wie sie in einem der Ansprüche 19 bis 29 angegeben sind.

36. Verstärkungstuch aus elastomerem Material, das eine Vielzahl von nichtmetallischen Verstärkungskorden aufweist, die wenigstens teilweise in ein elastomeres Material eingeschlossen sind, **dadurch gekennzeichnet, dass** die Korde radiopak sind.

37. Verstärkungstuch nach Anspruch 36, bei welchem die nichtmetallischen Verstärkungskorde in einem der Ansprüche 2 bis 5 definiert sind.

38. Elastomeres Industrieprodukt mit einem Verstärkungstuch, welches radiopake nichtmetallische Verstärkungskorde aufweist.

39. Elastomeres Industrieprodukt nach Anspruch 38, bei welchem die nichtmetallischen Verstärkungskorde nach einem der Ansprüche 2 bis 5 definiert sind.

40. Reifen für Fahrzeugräder mit wenigstens einem gummierten Verstärkungstuch aus elastomerem Material, das eine Vielzahl von nichtmetallischen Verstärkungskorden aufweist, **dadurch gekennzeichnet, dass** die Korde radiopak sind.

41. Reifen für Fahrzeugräder
- mit einem Karkassenäufbau, der wenigstens eine Karkassenlage mit Verstärkungskorden aufweist, die im Wesentlichen in radialen Ebenen ausgerichtet sind, die die Drehachse des Reifens enthalten,
- mit einem Laufflächenband, das sich am Umfang um den Karkassenaufbau herum erstreckt,
- mit einem Gurtaufbau, der am Umfang zwischen dem Karkassenaufbau und dem Laufflächenband angeordnet ist und wenigstens ein Paar von radial aufeinandergelegten Gurtstreifen aufweist, wobei jeder Streifen eine Vielzahl von Verstärkungskorden hat, die schräg bezüglich der Äquatorialebene des Reifens, in jedem Streifen parallel zueinander und quer über denen des benachbarten Streifens ausgerichtet sind, **dadurch gekennzeichnet, dass** der Reifen radiopake nichtmetallische Verstärkungskorde aufweist.

42. Reifen für Fahrzeugräder nach Anspruch 41, bei welchem die Verstärkungskorde der Karkassenlage radiopake nichtmetallische Korde sind.

43. Reifen für Fahrzeugräder nach Anspruch 41, bei welchem der Gurtaufbau radial außen zu dem Paar von Streifen eine Verstärkungslage aufweist, die mit nichtmetallischen Verstärkungskorden versehen ist, die im Wesentlichen parallel zueinander und zu der vorstehend erwähnten Äquatorialebene sind, wobei die nichtmetallischen Verstärkungskorde der radial äußeren Verstärkungslage radiopak sind.

44. Reifen für Fahrzeugräder nach Anspruch 41, bei welchem die nichtmetallischen Verstärkungskorde in einem der Ansprüche 2 bis 5 definiert sind.

## Revendications

1. Procédé pour conférer une radio-opacité à une toile de renfort faite de matériau élastomère comprenant des fils câblés de renfort non métalliques, ledit procédé comprenant les étapes suivantes consistant à :
(a) rendre lesdits fils câblés radio-opaques au moyen d'au moins un composé radio-opaque,
(b) incorporer lesdits fils câblés dans ledit matériau élastomère.

2. Procédé selon la revendication 1, dans lequel les fils câblés non métalliques sont choisis dans le groupe comprenant des fibres organiques et minérales.

3. Procédé selon la revendication 2, dans lequel les fibres organiques sont choisies parmi les fibres de polymère d'origine naturelle ou synthétique.

4. Procédé selon la revendication 3, dans lequel les fibres organiques sont choisies dans le groupe comprenant : la cellulose, la rayonne, le polypropylène, les polyesters, les polyamides, les polyamides aromatiques, les polycétones, le poly-p-benzamide, les poly(alcools vinyliques), les polyétheramides, leurs mélanges.

5. Procédé selon la revendication 2, dans lequel les fibres minérales sont choisies dans le groupe comprenant : les fibres de verre, les fibres de carbone, leurs mélanges.

6. Procédé selon la revendication 1, dans lequel le composé radio-opaque est choisi parmi les sels organiques ou minéraux de métaux lourds.

7. Procédé selon la revendication 6, dans lequel les métaux lourds sont choisis dans le groupe comprenant : le chrome, le manganèse, le fer, le cobalt, le nickel, le cuivre, le zinc, le palladium, l'argent, le cadmium, l'étain, le platine, l'or, le mercure, le plomb, le baryum, le radium, le thorium, l'uranium.

8. Procédé selon la revendication 7, dans lequel les métaux lourds sont choisis parmi le baryum, le plomb.

9. Procédé selon la revendication 6, dans lequel les sels organiques de métaux lourds sont choisis dans le groupe comprenant les sels d'acides carboxyliques aliphatiques, alicycliques ou aromatiques, saturés ou insaturés, d'acides sulfoniques, d'acides phosphoniques, d'acides boriques, ou leurs mélanges.

10. Procédé selon la revendication 9, dans lequel les sels organiques de métaux lourds sont choisis parmi les sels d'acides carboxyliques aliphatiques ou aromatiques, saturés ou insaturés.

11. Procédé selon la revendication 10, dans lequel les acides carboxyliques aliphatiques sont choisis dans le groupe comprenant : l'acide formique, l'acide acétique, l'acide propionique, l'acide butyrique, l'acide heptanoïque, l'acide hexanoïque, l'acide éthylhexanoïque, l'acide octanoïque, l'acide néodécanoïque, l'acide dodécanoïque, leurs mélanges, ou les acides gras tels que l'acide stéarique, l'acide oléique, l'acide linoléique, l'acide palmitique, ou leurs mélanges.

12. Procédé selon la revendication 9, dans lequel les acides carboxyliques aromatiques sont choisis dans le groupe comprenant : l'acide benzoïque, l'acide naphtoïque, l'acide phtalique, l'acide p-phénylène-diacétique, leurs mélanges.

13. Procédé selon la revendication 9, dans lequel les sels organiques de métaux lourds sont choisis dans le groupe comprenant : les propionates, les hexanoates, les dodécanoates, les stéarates, les naphténates, les alkylsulfonates, leurs mélanges.

14. Procédé selon la revendication 13, dans lequel les sels organiques de métaux lourds sont choisis dans le groupe comprenant le naphténate de plomb, le dodécanoate de baryum, le stéarate de baryum, les sels de plomb de l'acide 2-éthylhexanoïque, leurs mélanges.

15. Procédé selon la revendication 6, dans lequel les sels minéraux de métaux lourds sont choisis dans le groupe comprenant les halogénures, les sulfates, les carbonates, les phosphates, les tungstates, leurs mélanges.

16. Procédé selon la revendication 15, dans lequel les sels minéraux de métaux lourds sont choisis parmi le sulfate de baryum, le tungstate de baryum.

17. Procédé selon la revendication 6, dans lequel le sel organique ou minéral d'un métal lourd est présent à raison de pas moins de 0,1 mmol de métal/g de fibre.

18. Procédé selon la revendication 17, dans lequel le sel organique ou minéral d'un métal lourd est présent à raison d'entre 0,5 mmol et 2 mmol de métal/g de fibre.

19. Procédé selon la revendication 1, dans lequel le composé radio-opaque est choisi dans le groupe comprenant les composés organiques non ioniques solubles dans l'eau contenant au moins un atome d'iode, qui sont stables aux températures supérieures à 90°C.

20. Procédé selon la revendication 19, dans lequel le composé radio-opaque est choisi dans le groupe comprenant les composés organiques non ioniques solubles dans l'eau contenant au moins trois atomes d'iode, qui sont stables aux températures supérieures à 90°C.

21. Procédé selon la revendication 19, dans lequel les composés organiques sont choisis dans le groupe comprenant : l'iopamidol, l'acide ioglycamique, l'acide iopanoïque, le métrizamide, l'iohexol, la propyliodone.

22. Procédé selon la revendication 21, dans lequel le composé organique est l'iopamidol.

23. Procédé selon la revendication 1, dans lequel le composé radio-opaque est choisi dans le groupe comprenant les sels (composés organiques ioniques) des composés organiques indiqués dans les revendications 19 à 22.

24. Procédé selon la revendication 23, dans lequel le composé radio-opaque est choisi parmi l'iopodate de sodium, le diatrizoate de sodium, l'érythrosine B, l'iodophtaléine sodique, et leurs mélanges.

25. Procédé selon la revendication 24, dans lequel le composé radio-opaque est l'iopodate de sodium.

26. Procédé selon la revendication 19, dans lequel le composé organique non ionique est présent à raison de pas moins de 0,1 mmol d'iode/g de fibre.

27. Procédé selon la revendication 26, dans lequel le composé organique non ionique est présent à raison d'entre 0,5 mmol et 2 mmol d'iode/g de fibre.

28. Procédé selon la revendication 23, dans lequel le composé organique ionique est présent à raison de pas moins de 0,1 mmol d'iode/g de fibre.

29. Procédé selon la revendication 28, dans lequel le composé organique ionique est présent à raison d'entre 0,5 mmol et 2 mmol d'iode/g de fibre.

30. Procédé selon la revendication 1, dans lequel l'étape (a) comprend l'addition d'au moins un composé radio-opaque, dissous dans de l'eau, au cours de l'étape de polymérisation du polymère.

31. Procédé selon la revendication 1, dans lequel l'étape (a) comprend l'addition d'au moins un composé radio-opaque sous une forme non modifiée à la masse de la coulée de polymère, dans l'étape qui précède juste le filage du polymère.

32. Procédé selon la revendication 31, dans lequel le composé radio-opaque est choisi parmi les sels organiques ou minéraux de métaux lourds indiqués dans l'une quelconque des revendications 6 à 18.

33. Procédé selon la revendication 1, dans lequel l'étape (a) comprend l'addition d'au moins un composé radio-opaque sous une forme non modifiée à un agent d'apprêtage.

34. Procédé selon la revendication 1, dans lequel l'étape (a) comprend l'addition d'au moins un composé radio-opaque à une composition adhésive.

35. Procédé selon la revendication 34, dans lequel le composé radio-opaque est choisi parmi les composés non ioniques, ou les sels desdits composés, indiqués dans l'une quelconque des revendications 19 à 29.

36. Toile de renfort faite de matériau élastomère comprenant une pluralité de fils câblés de renfort non métalliques, au moins partiellement incorporés dans un matériau élastomère, **caractérisée en ce que** lesdits fils câblés sont radio-opaques.

37. Toile de renfort selon la revendication 36, dans lequel les fils câblés de renfort non métalliques sont définis dans l'une quelconque des revendications 2 à 5.

38. Produit manufacturé élastomère qui renferme une toile de renfort comprenant des fils câblés de renfort non métalliques radio-opaques.

39. Produit manufacturé élastomère selon la revendication 38, dans lequel les fils câblés de renfort non métalliques sont définis dans l'une quelconque des revendications 2 à 5.

40. Pneumatique pour roues de véhicules contenant au moins une toile de renfort caoutchoutée faite de matériau élastomère comprenant une pluralité de fils câblés de renfort non métalliques, **caractérisé en ce que** lesdits fils câblés sont radio-opaques.

41. Pneumatique pour roues de véhicules, comprenant :
- une structure d'armature comportant au moins une nappe d'armature comprenant des fils câblés de renfort qui sont orientés essentiellement dans des plans radiaux contenant l'axe de rotation du pneumatique,
- une bande de roulement s'étendant sur la circonférence de ladite structure d'armature,
- une structure de ceinture intercalée, sur la circonférence, entre la structure d'armature et la bande de roulement, comprenant au moins une paire de bandelettes talons de ceinture superposées radialement, chaque bandelette talon comportant une pluralité de fils câblés de renfort qui sont orientés à l'oblique par rapport au plan équatorial du pneumatique, parallèlement les uns aux autres dans chaque bandelette talon et de façon croisée par rapport à ceux de la bandelette talon adjacente,
**caractérisé en ce qu'**il comprend des fils câblés de renfort non métalliques radio-opaques.

42. Pneumatique pour roues de véhicules selon la revendication 41, dans lequel les fils câblés de renfort de ladite nappe d'armature sont des fils câblés non métalliques radio-opaques.

43. Pneumatique pour roues de véhicules selon la revendication 41, dans lequel ladite structure de ceinture comprend une couche de renfort radialement extérieure à ladite paire de bandelettes talons, qui est dotée de fils câblés de renfort non métalliques qui sont essentiellement parallèles les uns aux autres et dans le plan équatorial susmentionné, lesdits fils câblés de renfort non métalliques de ladite couche de renfort radialement extérieure étant radio-opaques.

44. Pneumatique pour roues de véhicules selon la revendication 41, dans lequel les fils câblés de renfort non métalliques sont définis dans l'une quelconque des revendications 2 à 5.
